# EUROPÄISCHE PATENTSCHRIFT

(11) **EP 1 600 314 B1**
(45) Veröffentlichungstag und Bekanntmachung des Hinweises auf die Patenterteilung: **16.06.2010**
(21) Anmeldenummer: 05008590.1
(22) Anmeldetag: 20.04.2005
(51) Int. Cl.: B60H 1/00, F04B 27/14, F04B 39/06

(54) **Anordnung in einem Kältemittelkreislauf und Arbeitsverfahren**
Arrangement and operating method in a refrigerant circuit
Arrangement et procédé d'operation dans un circuit de réfrigérant

(30) Priorität: 15.05.2004 DE 102004024255
(43) Veröffentlichungstag der Anmeldung: 30.11.2005
(73) Patentinhaber: Modine Manufacturing Company, Racine/Wisconsin 54403-2552 (US)
(72) Erfinder: Vetter, Frank, Dr., Dipl.-Phys., 73765 Neuhausen (DE)
(74) Vertreter: Wolter, Klaus-Dietrich

(56) Entgegenhaltungen:
- EP-A- 1 281 545
- DE-A1- 19 818 649
- US-A1- 2004 011 070
- PATENT ABSTRACTS OF JAPAN Bd. 2000, Nr. 11, 3. Januar 2001 (2001-01-03) & JP 2000 211350 A (JAPAN CLIMATE SYSTEMS CORP), 2. August 2000 (2000-08-02)

## Beschreibung

Die Erfindung betrifft eine Anordnung mit einem Kältemittelkreislauf einer vorzugsweise mit CO₂ als Kältemittel arbeitenden Klimaanlage eines Kraftfahrzeuges, der wenigstens einen Gaskühler / Kondensator, einen Verdampfer, ein Expansionsventil und einen Kompressor aufweist, wobei das Kältemittel an wenigstens einer Stelle des Kältemittelkreislaufes im Wärmeaustausch mit der Kühlflüssigkeit des Kraftfahrzeugmotors ist. Ferner betrifft die Erfindung ein Arbeitsverfahren in einer solchen Anordnung.
Eine solche Anordnung geht prinzipiell aus der EP 1 281 545 A1 hervor, auch wenn die Bestandteile der Klimaanlage in den dortigen Figuren nicht gezeigt werden. Es ist dort vorgesehen, die Vorkühlung des Kältemittels im Rahmen einer Anordnung des Gaskühlers in einer luftgekühlten Wärmeübertrageranordnung vorzunehmen. Die Zuführleitung des Gaskühlers ist entweder im Kontakt mit den Wärmetauscherrohren des Kühlflüssigkeitskühlers angeordnet, oder es befindet sich ein Wärmeüberträger in dem im Kühlkreislauf vorgesehenen Ausgleichsbehälter oder auch in einem der Sammelkästen des Kühlflüssigkeitskühlers, um die Vorkühlung des Kältemittels zu erreichen. Diese einzelnen Maßnahmen sind gemäß dem genannten Dokument auch kombinierbar, um die Vorkühlung weiter zu optimieren. Der mit der bekannten Anordnung erreichbare Grad der Vorkühlung könnte trotz allem für bestimmte Einsatzfälle als zu gering angesehen werden. Eine verstärkte Vorkühlung ist demzufolge wünschenswert.
Auch in der EP 1 338 449 A1 wird mit Hilfe der Kühlflüssigkeit des Motors das CO₂ auf der Hochdruckseite, also hinter dem Kompressor, direkt gekühlt. Die hier beschriebene Möglichkeit der Vorkühlung wird sowohl für den Klimaanlagenbetrieb als auch für den Heißgaszyklus verwendet. Nachteilig ist jedoch, dass ein zusätzlicher Wärmetauscher eingebaut werden muss, wodurch sich die Kosten des gesamten Systems erhöhen. Das trifft auch auf die Fahrzeugklimaanlage zu, die in DE 198 18 649A1 gezeigt und beschrieben wurde, sowie auf das Klimatisierungssystem, welches mit der US 2004/0011070A1 (mit dem nächsten Stand der Technik) bekannt gemacht wurde.
Indirekt gekühlt wird das Kältemittel in der EP 1 130 261 A2 und in der EP 1 130 260 A2 durch das Kompressorenöl. Das Kompressorenöl wird in einem externen Separator vom CO₂ getrennt, wodurch das Kompressorenöl leicht gekühlt wird. Damit wird auch der Kompressor und auf diese Weise auch das CO₂ etwas gekühlt. Dies reicht jedoch oft nicht aus, um die hohen Belastungen der Materialien des Kompressors und der Klimaanlage durch die hohen Temperaturen, die bei der Kompression des CO₂ entstehen, zu reduzieren.

Die Aufgabe der Erfindung besteht darin, weitere Maßnahmen zur Vorkühlung des Kältemittels vorzuschlagen, die separat oder zusätzlich vorgesehen werden können. Dadurch erhöht sich die Lebensdauer der Komponenten und die Leistungsfähigkeit der Klimaanlage, wodurch Kosten und Primärenergie eingespart werden.

Diese Aufgabe wird erfindungsgemäß durch die Merkmale aus dem Patentanspruch 1 gelöst. Unter einem mit dem Kompressor, beispielsweise mit seinem Anschlusselement, wärmeleitend verbundenem Wärmetauscher, ist beispielsweise ein solcher zu verstehen, der wärmeleitend mit dem Kompressor verbunden ist und entweder Strömungskanäle für das Kältemittel und für die Kühlflüssigkeit aufweist oder lediglich wenigstens einen Strömungskanal für die Kühlflüssigkeit aufweist, wobei der wenigstens eine Strömungskanal für das Kältemittel sich beispielsweise in dem Anschlusselement befinden kann. Ein mit dem Kompressor vereinigter Wärmetauscher ist Teil des Kompressors geworden. Auf jeden Fall soll dort am Kompressor der Wärmeaustausch zwischen der Kühlflüssigkeit und dem Kältemittel stattfinden.

Die Anordnung eines Kältemittel / Kühlflüssigkeits - Wärmetauschers, der wärmeleitend mit dem Kompressor verbunden oder vereinigt ist, hat einige Vorteile. Zunächst wird durch die wärmeleitende Verbindung des Wärmetauschers mit dem Kompressor derselbe ebenfalls gekühlt. Besonders vorteilhaft ist es diesbezüglich, wenn einer der die Kühlflüssigkeit führenden Kanäle des Wärmetauschers unmittelbar wärmeleitend beispielsweise an ein Anschlusselement des Kompressors angeschlossen ist. Durch geschickte Wahl der Anschlüsse am Kompressor für das Kältemittel und durch Kühlung des Anschlusselements - direkt mittels der Kühlflüssigkeit des Motors - kann die Effizienz der gesamten Klimaanlage gesteigert werden, wodurch sich auch der Kraftstoffverbrauch des KFZ verringert. Durch den Einsatz des erfindungsgemäßen Wärmetauschers wird der häufig vorhandene thermische Kurzschluss verhindert, sodass das in den Kompressor einströmende Kältemittel möglichst nicht mit dem ausströmenden komprimierten heißen Kältemittel in thermischen Kontakt kommt.

Ein weiterer erreichbarer Vorteil der Vorkühlung des Kältemittels besteht darin, dass kostengünstigere Verbindungsleitungen im Kältemittelkreislauf vorgesehen werden können, die die teuren "Hochtemperatur- Leitungen" auf der Hochdruckseite wenigstens zum Teil ersetzen, da das Kältemittel durch den Einsatz des erfindungsgemäßen Wärmetauschers vorzugsweise auf der Hochdruckseite gekühlt wird. Die Arbeitsdrücke auf der Hochdruckseite des Kreislaufs der Klimaanlage sind relativ hoch - im Bereich von bis zu 150 bar oder mehr. Die Temperaturen liegen ohne Vorkühlung des Kältemittels ebenfalls hoch - im Bereich bis zu 170 °C. Diese Drücke und Temperaturen bewirken extreme Belastungen für die beteiligten Materialien.

In Weiterbildung des erfinderischen Gedankens ist gemäß Anspruch 2 vorgesehen, den erfindungsgemäßen Wärmetauschers in Strömungsrichtung vorzugsweise hinter dem Kompressor anzuordnen, um das hochdruckseitige Kältemittel zu kühlen.

In einer Weiterbildung des erfinderischen Gedankens ist gemäß Anspruch 3 vorgesehen, den saugseitigen Kältemitteleintritt und den hochdruckseitigen Kältemittelaustritt in einem einzigen Anschlusselement des Kompressors anzuordnen.

In einer anderen Weiterbildung des erfinderischen Gedankens, gemäß Anspruch 4, ist vorgesehen, dass der Wärmetauscher unmittelbar an das Anschlusselement angrenzt, so dass ein Strömungskanal, durch den die Kühlflüssigkeit des Motors strömt, in wärmeleitendem Kontakt mit dem Anschlusselement ist.

In einer vorteilhaften anderen Weiterbildung des erfinderischen Gedankens, nach Anspruch 5, ist vorgesehen, in das Anschlusselement einen Abscheider für das Kompressorenöl zu integrieren, sodass das Kompressorenöl durch das gekühlte Anschlusselement indirekt gekühlt wird.

In einer anderen vorteilhaften Weiterbildung des erfinderischen Gedankens, nach Anspruch 6, ist vorgesehen, das Kompressorenöl gleichzeitig aktiv mittels der Kühlflüssigkeit zu kühlen. Hierzu wird entweder ein Wärmetauscher verwendet, der für drei Medien geeignet ist oder es wird ein weiterer Wärmetauscher eingesetzt, mit dem das Kompressorenöl direkt am Kompressor in dem Anschlusselement mit der Kühlflüssigkeit des Motors gekühlt wird. Dadurch wird die Lebensdauer des Kompressors wesentlich erhöht.

Eine andere Weiterbildung des erfinderischen Gedankens, nach Anspruch 7, sieht vor, dass der Wärmetauscher der Form des Kompressors, bzw. seines Anschlusselements angepasst ist.

In Weiterbildung des erfinderischen Gedankens ist außerdem vorgesehen, den Wärmetauscher in einem Kältemittelkreislauf einzusetzen, der zwei Betriebsmodi aufweist, nämlich einen Wärmepumpenmodus bzw. Heißgaszyklus und einen Kühlkreislauf. Dazu ist ein Umschaltventil und wenigstens ein weiteres Expansionsventil im Heißgaszyklus angeordnet. In diesem Betriebsmodus stellt der Wärmetauscher erwärmte Kühlflüssigkeit für die Heizung des Fahrgastraums des KFZ zur Verfügung und kann somit den dort sonst üblichen Wärmetauscher ersetzen.

In Weiterbildung des erfinderischen Gedankens nach Anspruch 9 ist, im Rahmen eines Arbeitsverfahrens, eine Regelung der Kühlleistung des Wärmetauschers, vorzugsweise durch die Regelung des Mengenstroms der Kühlflüssigkeit für den Betriebsmodus des Heißgaszyklus vorgesehen, um zu verhindern, dass flüssiges Kältemittel in den Kompressor strömt, was die Funktion des Kompressor beeinträchtigen kann.

Der Kompressor kann mit einer oder zwei Druckstufen ausgestattet sein, je nach Auslegung der Klimaanlage. Der erfindungsgemäße Wärmetauscher wird an entsprechenden Stellen eingesetzt. Er kann im Anschluss an die zweite Druckstufe direkt an dem dortigen Anschlusselement angeschlossen sein. Es können aber auch zwei kleinere Wärmetauscher an jeder Druckstufe vorhanden sein. Bevorzugt ist hier jedoch ein Kompressor mit nur einer Druckstufe vorgesehen.

Im weiteren wird die Erfindung an Hand der Figuren 1, 2 und 3 beschrieben:
Figur 1 zeigt die Erfindung in einem prinzipiellen Aufbau einer Klimaanlage eines Kraftfahrzeuges.
Figur 2 zeigt den Ausschnitt I der Figur 1 im Detail für ein erstes Ausführungsbeispiel.
Figur 3 zeigt den Ausschnitt I der Figur 1 im Detail für ein zweites Ausführungsbeispiel.

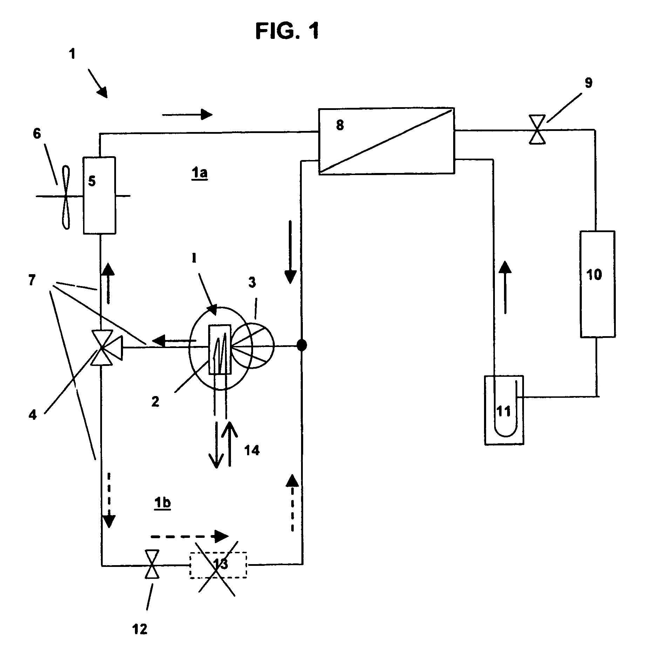

Der im Ausführungsbeispiel nach der Figur 1 gezeigte Kältemittelkreislauf **1** benutzt CO₂ als Kältemittel und kann in zwei verschiedenen Betriebsmodi arbeiten. Zum einen als Klimaanlage zum Kühlen **1a** (Kühlmodus) des Fahrgastraumes eines KFZ und zum anderen im Heißgaszyklus **1b** zum Aufheizen der Kühlflüssigkeit, die beispielsweise zur Heizung des Fahrgastraumes herangezogen werden kann.
Solch ein Kältemittelkreislauf **1** ist überwiegend aus bekannten Komponenten aufgebaut und arbeitet wie folgt. Das Kältemittel wird im Kompressor **3** komprimiert auf ca. 100 bis 150 bar, wobei es sich auf etwa 170°C erhitzt. Durch den Einsatz des Wärmetauschers **2** wird das Kältemittel durch die Kühlflüssigkeit **14** des Motors vorgekühlt. Danach wird es vom Umschaltventil **4** entweder in den Kühlteil **1a** oder in den Heißgaszyklus **1b** geleitet. Im Kühlteil **1a** folgt nun der Gaskühler **5,** in dem das zwar vorgekühlte, aber immer noch ziemlich heiße Kältemittel vom Luftstrom des Ventilators **6** gekühlt wird. Das Kältemittel wird dabei durch die Leitungen **7** geführt. Nach dem Gaskühler **5** strömt das Kältemittel durch einen internen Wärmetauscher **8.** Nach der Expansion durch das Expansionsventil **9** kühlt sich das Kältemittel ab und wird im Verdampfer **10** wieder etwas erwärmt, indem es der durch ihn hindurchströmenden warmen Außenluft Wärme entzieht. Somit wird die Außenluft gekühlt und steht nun zur Kühlung des Fahrgastraums zur Verfügung. Das Kältemittel strömt dann durch den Sammler **11,** um flüssige Anteile des Kältemittels abzuscheiden, und dann erneut - aber jetzt auf der anderen Seite - durch den internen Wärmetauscher **8.** Dort kühlt es das hochdruckseitige Kältemittel vor dem Expansionsventil **9.** Danach schließt sich der Kreislauf der Klimaanlage und das Kältemittel wird wieder im Kompressor **3** verdichtet.

Ist das Umschaltventil **4** so eingestellt, dass die Klimaanlage im Heißgaszyklus **1b** arbeitet, wird die zur Erwärmung des Fahrgastraums benötigte Wärme direkt am Kompressor vom Wärmetauscher **2** an die Kühlflüssigkeit **14** des Motors abgegeben. Danach strömt das Kältemittel durch ein anderes Expansionsventil **12** und wieder zurück zum Kompressor. Auf diese Weise kann auf den im Stand der Technik üblichen Wärmetauscher **13,** der erwärmte Kühlflüssigkeit für einen nicht gezeigten Heizer zum Beheizen des Fahrgastraumes zur Verfügung stellt, verzichtet werden. Dieser Wärmetauscher **13** wurde in der Fig. 1 gestrichelt dargestellt und kreuzweise durchgestrichen, womit der erwähnte möglich gewordene Verzicht angedeutet sein soll. Der aus dem Stand der Technik bekannte Heißgaszyklus ist - im Gegensatz zu dem hier möglichen Heißgaszyklus **1b -** ein auf Grund der Physik automatisch geregelter Zyklus. Durch das Weglassen des Wärmetauschers **13** werden die Kosten der gesamten Klimaanlage zumindest nicht erhöht. Man benötigt im Gesamtsystem Klimaanlage nur noch einen Wärmetauscher **2,** der sowohl im Kühlmodus **1a** als auch im Heizmodus **1 b** eingesetzt wird. Allerdings ergibt sich eine Verschiebung des Arbeitsbereiches in das Zweiphasengebiet. Deshalb macht sich im Heißgaszyklus / Heizmodus **1b** die Regelung der Kühlleistung, beispielsweise durch die temperaturgesteuerte Regelung des Mengenstromes der Kühlflüssigkeit **14** durch den Wärmetauscher **2** erforderlich, damit nach der Expansion des gekühlten Kältemittels am Expansionsventil **12** kein Zweiphasengemisch vorhanden ist. Ohne Regelung der Kühlleistung könnte sich ein instabiler Kreislauf einstellen, bei dem flüssiges Kältemittel auftritt, das den Kompressor 3 beeinträchtigen kann.

Die Leitungen **7,** durch die das Kältemittel auf der Hochdruckseite des Kreislaufes der Klimaanlage **1** fließt, wurden im Stand der Technik als Stahl - Wellbalg-Schläuche beschrieben. Baut man jedoch, wie in der Erfindung vorgeschlagen, direkt an ein Anschlusselement **3a** des Kompressors **3** einen Wärmetauscher **2** an, in dem das Kältemittel mit der Kühlflüssigkeit **14** des Motors gekühlt wird, so kann man auf diese teuren Stahl - Wellbalg - Schläuche verzichten und stattdessen kostengünstigere Schläuche, Dichtungen u. a. Zubehörteile verwenden.

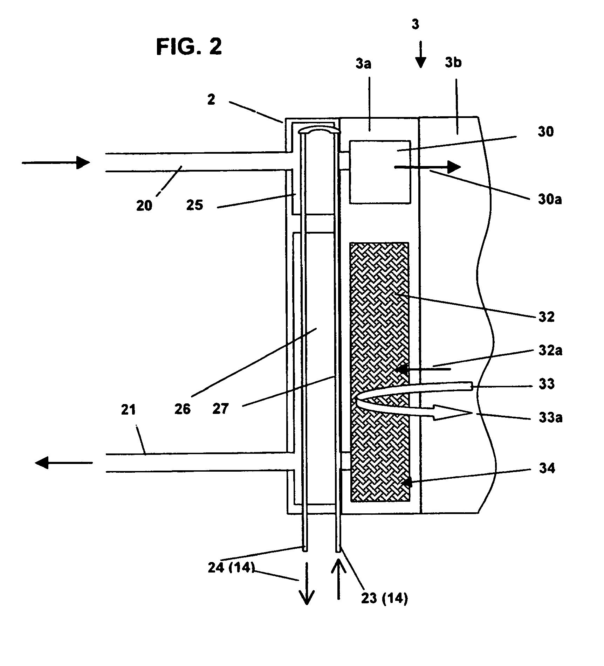

Der erfindungsgemäße mit dem Kompressor **3** verbundene oder vereinigte Wärmetauscher **2** wird nun anhand der Figur 2 detaillierter erläutert. Hier ist der Ausschnitt I aus der Figur 1 vergrößert dargestellt. Das Kältemittel strömt über einen Einlassstutzen **20** in den Kompressor **3.** Der Kompressor **3** besitzt einen Deckel bzw. eine Flanschplatte **3a** oder ein ähnliches Anschlusselement (nachfolgend Flanschplatte genannt) und ein Gehäuse **3b.** In der Flanschplatte **3a** ist eine Einlasskammer **30** und eine Auslasskammer **32** vorgesehen. Der Einlassstutzen 20 mündet im gezeigten Ausführungsbeispiel direkt in die Einlasskammer 30. Von dort aus gelangt das Kältemittel durch die Einlassöffnung **30a** in die Kompressionsstufe des Kompressors **3** und wird dort komprimiert. Das Kältemittel verlässt den Kompressor **3** wieder über die Auslassöffnung **32a** in die Auslasskammer **32** und den Auslassstutzen **21.** Dieser ist mit der Leitung **7** verbunden. Beim Durchgang durch den Kompressor **3** nimmt das Kältemittel Kompressorenöl **33** auf. Das Kompressorenöl **33** wird benötigt, damit der Kompressor **3** einwandfrei funktioniert. In der Auslasskammer **32** kann ein interner Kompressorenölabscheider **34** integriert sein, sodass die Rückführung **33a** des aus dem Kältemittel separierten Kompressorenöls **33** ohne großen Aufwand gestattet ist.
Der Wärmetauscher **2** steht mit der Flanschplatte **3a** des Kompressors **3** in wärmeleitendem Kontakt. Der Wärmetauscher **2** ist mit nicht dargestellten Befestigungsmitteln an der Flanschplatte **3a** befestigt. Über den Einlass **23** strömt Kühlflüssigkeit des Motors in den Wärmetauscher **2,** sodass das ausströmende Kältemittel gekühlt wird. Gleichzeitig verhindert diese Ausbildung einen thermischen Kurzschluss am Kompressor, was bedeutet, dass das in den Kompressor **3** einströmende Kältemittel nicht durch das ausströmende Kältemittel erwärmt wird. Über den Auslass **24** verlässt die Kühlflüssigkeit **14** den Wärmetauscher **2** und wird dem Kühlkreislauf des Motors wieder zugeführt. Die innere Ausgestaltung des Wärmetauschers **2** kann verschieden sein.
Die Strömungskanäle **25, 26** für das Kältemittel können entweder durch die beiden Stutzen **20** und **21,** die einfach durch den Wärmetauscher **2** hindurchgeführt werden, gebildet sein, oder, wie in der Figur 2 gezeigt, können sie als Kammern ausgebildet werden. Je nach Anforderung kann man das Kältemittel auch durch rohr - oder plattenförmige Strömungskanäle **25, 26** leiten. Es ist selbstverständlich sichergestellt, dass das Kältemittel nicht kurzschlussartig von der Hochdruck - **25** auf die Niederdruckseite **26** gelangt. Bei Bedarf kann der Stutzen **20** der Niederdruckseite einfach als Strömungskanal **25** durch den Wärmetauscher **2** geführt werden und für die Hochdruckseite wird ein rohr - oder plattenförmiger Strömungskanal **26** verwendet. Die Strömungskanäle **25, 26** für das Kältemittel stehen in wärmeleitendem Kontakt mit den Strömungskanälen **27** für die Kühlflüssigkeit **14** des Motors. Durch wie viele Strömungskanäle **27** die Kühlflüssigkeit **14** des Motors durch den Wärmetauscher **2** läuft, ist den jeweiligen Erfordernissen anzupassen.
Gezeigt ist der Fall, in dem es zwei Strömungskanäle **27** gibt, durch die die Kühlflüssigkeit **14** strömt. Diese Strömungskanäle **27** können entweder rohrförmig oder plattenförmig ausgebildet sein. Möglich ist auch, dass es sich um Bohrungen in einer massiven Platte handelt. Eine relativ hohe Bedeutung bzw. Wirksamkeit hat das Merkmal, wonach einer der Strömungskanäle **27** in wärmeleitendem Kontakt mit der Flanschplatte **3a** steht.
Es kann ein üblicher Plattenwärmetauscher, wie in der Patentanmeldung EP 1 400 772 A2 beschrieben, oder auch eine einzelne speziell gestaltete Platte sein, die den hier gewünschten Effekt der Kühlung des Kältemittels bewirkt. Die Form des Wärmetauschers **2** ist idealerweise der Form des Kompressors **3** und seiner Flanschplatte **3a** anzupassen.
Der Wärmetauscher **2** darf entweder mit oder ohne Gehäuse ausgestaltet sein. Allerdings wird der Wärmetauscher **2** in der hier vorliegenden Anwendung nur einige wenige Strömungskanäle **25, 26, 27** für die verschiedenen Medien benötigen. Im Allgemeinen wird es je nach Bedarf auch turbulenzerzeugende Vorsprünge oder Einlagen geben, die in den verschiedenen Strömungskanälen der verschiedenen Medien den Wärmeaustausch verbessern. (nicht gezeigt)
Ebenfalls hier nicht gezeigt ist die Möglichkeit, den Einlassstutzen **20** ohne Kühlung seitlich an der Flanschplatte **3a** anzuschließen. Wichtig ist auch hier, dass ein thermischer Kurzschluss und ein "Druck - Kurzschluss" verhindert wird.
Der Wärmetauscher **2** wurde in einem nicht gezeigten Ausführungsbeispiel direkt in die Flanschplatte **3a** integriert, also ohne dass spezielle Befestigungsmittel notwendig sind.
Die Anzahl der Strömungskanäle **25** und **26** für das Kältemittel und **27** für die Kühlflüssigkeit müssen so ausgelegt werden, dass der Wärmetauscher **2** sowohl im Kühlmodus **1a** als auch im Heizmodus **1b** einwandfrei arbeitet.
Durch den Einbau des Wärmetauschers **2** direkt am Kompressor erreicht man den Vorteil, dass die Wärme auf der Hochdruckseite des Kreislaufs abgegeben wird. Dort liegt eine größere Temperaturdifferenz zwischen Kältemittel und Kühlflüssigkeit vor, sodass im Vergleich zum Stand der Technik ein kleinerer Wärmetauscher vorgesehen werden kann. Des weiteren lässt sich auf diese Weise auch das zusätzliche Ausgleichsvolumen einsparen, da die Klimaanlage mit dem erfindungsgemäßen Wärmetauscher **2** sehr stabil arbeitet.

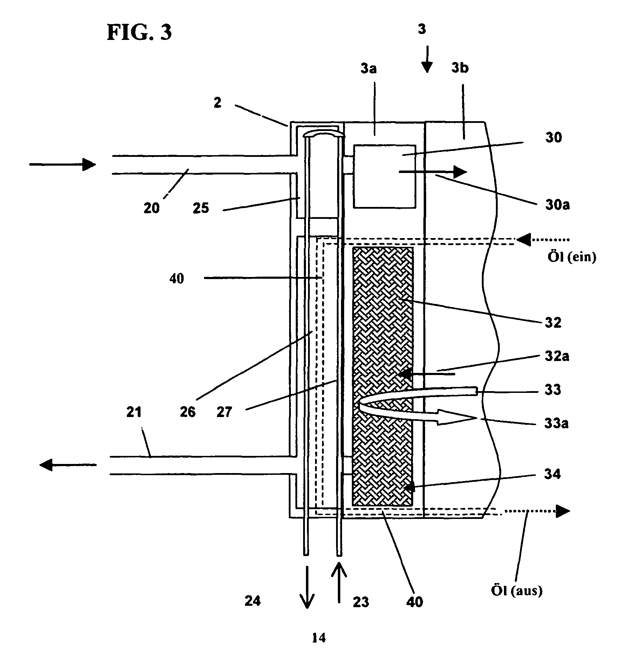

In der Figur 3 ist eine weitere Ausbildung des Wärmetauschers **2** gezeigt. Hier wird das Kompressorenöl **33** aktiv im Wärmetauscher **2** über den Strömungskanal **40** mitgekühlt. Es kann nun ein Wärmetauscher **2,** der für drei Medien geeignet ist, verwendet werden. Es könnte sich bei diesem Wärmetauscher um einen "gehäuselosen" Wärmetauscher handeln, wie er prinzipiell im EP 819 907 B1 der Anmelderin gezeigt und beschrieben ist. Allerdings wird der Wärmetauscher **2** in der hier vorliegenden Anwendung nur einige wenige Strömungskanäle **25, 26, 27, 40** für die verschiedenen Medien benötigen. Falls erforderlich darf der Wärmetauscher **2** jedoch auch ein Gehäuse besitzen.
Im Allgemeinen wird es je nach Bedarf auch turbulenzerzeugende Vorsprünge oder Einlagen geben, die in den verschiedenen Strömungskanälen der Medien den Wärmeaustauschgrad erhöhen.

Ohne den Einsatz des Wärmetauschers **2** liegt die Temperatur der Flanschplatte **3a** bei ca. 170°C. Bei diesen hohen Temperaturen ermüden die Dichtungen, das Kompressorenöl **33,** das Aluminiumgehäuse **3b, 3a** des Kompressors **3** und weitere Bauteile relativ schnell. Durch Kühlung der Flanschplatte **3a** des Kompressors **3** wird die Temperatur der Flanschplatte **3a** gesenkt und dadurch wird die Lebensdauer des Kompressors **3** sowie dessen Wirkungsgrad wesentlich erhöht.

Durch die direkte oder indirekte Kühlung des Kompressorenöls **33** wird der gesamte Kompressor **3** gekühlt und dessen Leistung angehoben.

## Patentansprüche

1. Anordnung mit einem Kältemittelkreislauf einer vorzugsweise mit CO₂ als Kältemittel arbeitenden Klimaanlage eines Kraftfahrzeuges, der wenigstens einen Gaskühler / Kondensator (5), einen Verdampfer (10), ein Expansionsventil (9) und einen Kompressor (3) aufweist, wobei das Kältemittel an wenigstens einer Stelle des Kältemittelkreislaufes einem Wärmeaustausch mit der Kühlflüssigkeit (14) des Kraftfahrzeugmotors unterzogen ist, **dadurch gekennzeichnet, dass**
der Kompressor (3) mit wenigstens einem Kältemittel / Kühlflüssigkeits - Wärmetauscher (2) entweder körperlich verbunden oder vereinigt ist, wobei wenigstens ein Strömungskanal (25, 26) für das Kältemittel und ein Strömungskanal (27) für die Kühlflüssigkeit (14) vorhanden ist.

2. Anordnung nach Anspruch 1, **dadurch gekennzeichnet, dass** sich der Wärmetauscher (2) - in Strömungsrichtung des Kältemittels gesehen -hinter dem Kompressor (3) befindet, um das hochdruckseitige Kältemittel zu kühlen.

3. Anordnung nach Anspruch 1 oder 2, **dadurch gekennzeichnet, dass** der Kompressor (3) wenigstens einen saugseitigen Kältemitteleintritt und einen hochdruckseitigen Kältemittelaustritt aufweist, die in einem einzigen Anschlusselement (3a) angeordnet sind.

4. Anordnung nach Anspruch 1, 2 oder 3, **dadurch gekennzeichnet, dass** der Wärmetauscher (2) unmittelbar an das Anschlusselement (3a) angrenzt, wobei wenigstens ein Strömungskanal (27) für die Kühlflüssigkeit (14) wärmeleitend an dem Anschlusselement (3a) anliegt.

5. Anordnung nach einem der vorstehenden Ansprüche, **dadurch gekennzeichnet, dass** im Kompressor (3), in dessen Anschlusselement (3a), ein Abscheider (34) für das Kompressorenöl (33) integriert ist, um dasselbe aus dem Kältemittel zu entfernen und eine Rückführvorrichtung (33a) für das abgeschiedene Kompressorenöl (33).

6. Anordnung nach einem der vorstehenden Ansprüche 1 - 5, **dadurch gekennzeichnet, dass** der Wärmetauscher (2) ein Wärmetauscher für drei wärmetauschende Medien (Kühtflüssigkeit/CO2/ Kompressorenöl) ist, oder dass ein weiterer in wärmeleitender Verbindung mit dem Kompressor (3) stehender Wärmetauscher (20) zur Temperierung des Kompressorenöls mittels der Kühlflüssigkeit (14) vorgesehen ist.

7. Anordnung nach einem der vorstehenden Ansprüche, **dadurch gekennzeichnet, dass** der Wärmetauscher (2) in seiner Form an den Kompressor (3) angepasst ist.

8. Anordnung nach einem der vorstehenden Ansprüche, **dadurch gekennzeichnet, dass** der Kältemittelkreislauf der Klimaanlage entweder lediglich einen Kühlkreislauf (1a) oder einen Kühlkreislauf (1a) und einen Heizkreislauf (1b) besitzt.

9. Arbeitsverfahren für eine Klimaanlage die eine Anordnung gemäß Anspruch 1 aufweist, die einen Kühlkreislauf (1a) und einen Heißgaskreislauf (1b) aufweist, wobei das Kältemittel an wenigstens einer Stelle des Kältemittelkreislaufes einem Wärmeaustausch mit der Kühlflüssigkeit des Kraftfahrzeugmotors in einem Wärmetauscher (2) unterzogen wird,
**dadurch gekennzeichnet, dass** die Leistung des Wärmetauschers (2) durch die Regelung des Mengenstroms der Kühlflüssigkeit geregelt wird, um den gasförmigen Aggregatzustand des Kältemittels im Heißgaskreislauf (1 b) am Eintritt in den Kompressor (3) zu gewährleisten.

## Claims

1. Arrangement with a refrigerant circuit of an air-conditioning system, operating preferably with CO₂ as refrigerant, of a motor vehicle, which refrigerant circuit has at least one gas cooler/condenser (5), an evaporator (10), an expansion valve (9) and a compressor (3), the refrigerant being subjected, at at least one point of the refrigerant circuit, to a heat exchange with the cooling liquid (14) of the motor vehicle engine, **characterized in that** the compressor (3) is either physically connected or combined with at least one refrigerant/cooling liquid heat exchanger (2), at least one flow duct (25, 26) for the refrigerant and one flow duct (27) for the cooling liquid (14) being present.

2. Arrangement according to Claim 1, **characterized in that** the heat exchanger (2) is located downstream of the compressor (3), as seen in the direction of flow of the refrigerant, in order to cool the high-pressure-side refrigerant.

3. Arrangement according to Claim 1 or 2, **characterized in that** the compressor (3) has at least one suction-side refrigerant inlet and one highpressure-side refrigerant outlet which are arranged in a single connection element (3a).

4. Arrangement according to Claim 1, 2 or 3, **characterized in that** the heat exchanger (2) is directly contiguous to the connection element (3a), at least one flow duct (27) for the cooling liquid (14) bearing in a heat-conducting manner against the connection element (3a).

5. Arrangement according to one of the preceding claims, **characterized in that** the compressor (3) has integrated in it, in its connection element (3a), a separator (34) for the compressor oil (33), in order to remove the latter from the refrigerant, and a recirculation device (33a) for the separated compressor oil (33).

6. Arrangement according to one of the preceding Claims 1-5, **characterized in that** the heat exchanger (2) is a heat exchanger for three heat-exchanging media (cooling liquid/CO₂/compressor oil), or **in that** a further heat exchanger (20) connected heat-conductively to the compressor (3) is provided for controlling the temperature of the compressor oil by means of the cooling liquid (14).

7. Arrangement according to one of the preceding claims, **characterized in that** the heat exchanger (2) is adapted in its form to the compressor (3).

8. Arrangement according to one of the preceding claims, **characterized in that** the refrigerant circuit of the air-conditioning system possesses either only a cooling circuit (1a) or a cooling circuit (1a) and a heating circuit (1b).

9. Operating method for an air-conditioning system which has an arrangement according to Claim 1 and has a cooling circuit (1a) and a hot-gas circuit (1b), the refrigerant being subjected, at at least one point of the refrigerant circuit, to a heat exchange with the cooling liquid of the motor vehicle engine in a heat exchanger (2), **characterized in that** the performance of the heat exchanger (2) is regulated by the regulation of the mass flow of the cooling liquid, in order to ensure the gaseous state of aggregation of the refrigerant in the hot-gas circuit (1b) at the inlet into the compressor (3).

## Revendications

1. Agencement comprenant un circuit de réfrigérant d'une installation de climatisation d'un véhicule automobile fonctionnant de préférence avec du CO₂ en tant que réfrigérant, qui présente au moins un refroidisseur de gaz / condensateur (5), un évaporateur (10), une soupape d'expansion (9) et un compresseur (3), le réfrigérant étant soumis à un échange de chaleur avec le liquide de refroidissement (14) du moteur du véhicule automobile en au moins un endroit du circuit de réfrigérant, **caractérisé en ce que**
le compresseur (3) est connecté physiquement ou réuni à au moins un échangeur de chaleur (2) réfrigérant / liquide de refroidissement, au moins un canal d'écoulement (25, 26) pour le réfrigérant et un canal d'écoulement (27) pour le liquide de refroidissement (14) étant prévu.

2. Agencement selon la revendication 1, **caractérisé en ce que** l'échangeur de chaleur (2) - vu dans la direction d'écoulement du réfrigérant - se trouve derrière le compresseur (3), afin de refroidir le réfrigérant du côté haute pression.

3. Agencement selon la revendication 1 ou 2, **caractérisé en ce que** le compresseur (3) présente au moins une entrée de réfrigérant côté aspiration, et une sortie de réfrigérant côté haute pression, qui sont disposées dans un élément de raccordement unique (3a).

4. Agencement selon la revendication 1, 2 ou 3, **caractérisé en ce que** l'échangeur de chaleur (2) est directement adjacent à l'élément de raccordement (3a), au moins un canal d'écoulement (27) pour le liquide de refroidissement (14) s'appliquant en conduisant la chaleur contre l'élément de raccordement (3a).

5. Agencement selon l'une quelconque des revendications précédentes, **caractérisé en ce qu'**un séparateur (34) pour l'huile du compresseur (33) est intégré dans le compresseur (3), dans son élément de raccordement (3a), afin d'éliminer l'huile du compresseur du réfrigérant, et il est prévu un dispositif de retour (33a) pour l'huile de compresseur (33) séparée.

6. Agencement selon l'une quelconque des revendications 1 à 5, **caractérisé en ce que** l'échangeur de chaleur (2) est un échangeur de chaleur pour trois milieux d'échange de chaleur (liquide de refroidissement/CO₂/huile de compresseur), ou **en ce qu'**un autre échangeur de chaleur (20) en liaison thermoconductrice avec le compresseur (3) est prévu pour mettre en température l'huile de compresseur au moyen du liquide de refroidissement (14).

7. Agencement selon l'une quelconque des revendications précédentes, **caractérisé en ce que** la forme de l'échangeur de chaleur (2) est adaptée à celle du compresseur (3).

8. Agencement selon l'une quelconque des revendications précédentes, **caractérisé en ce que** le circuit de réfrigérant de l'installation de climatisation possède soit seulement un circuit de refroidissement (1a) soit un circuit de refroidissement (1a) et un circuit de chauffage (1b).

9. Procédé de travail pour une installation de climatisation qui présente un agencement selon la revendication 1, qui présente un circuit de refroidissement (1a) et un circuit de gaz chaud (1b), le réfrigérant étant soumis à un échange de chaleur avec le liquide de refroidissement du moteur du véhicule automobile dans un échangeur de chaleur (2), en au moins un point du circuit de réfrigérant,
**caractérisé en ce que** la puissance de l'échangeur de chaleur (2) est régulée par la régulation du débit de liquide de refroidissement afin de garantir un état gazeux du réfrigérant dans le circuit de gaz chaud (1b) à l'entrée dans le compresseur (3).
